# FASCICULE DE BREVET EUROPEEN

(11) **EP 0 632 622 B1**
(45) Date de publication et mention de la délivrance du brevet: **11.11.1998**
(21) Numéro de dépôt: 94460014.7
(22) Date de dépôt: 09.06.1994
(51) Int. Cl.: H04L 12/56, H04Q 11/04

(54) **Procédé pour espacer temporellement les émissions de cellules appartenant à des messages ainsi que des dispositifs pour la mise en oeuvre d'un tel procédé**
Verfahren zur zeitlichen Einteilung von zu Nachrichten gehörenden Zellemissionen sowie Vorrichtung zur Durchführung dieses Verfahrens
Method of temporally spacing cell transmissions belonging to messages and apparatus for carrying out the method

(30) Priorité: 24.06.1993 FR 9307942
(43) Date de publication de la demande: 04.01.1995
(73) Titulaire: FRANCE TELECOM, 75015 Paris (FR)
(72) Inventeur: Boyer, Jacqueline, F-22300 Lannion (FR); Servel, Michel, F-22300 Lannion (FR); Boyer, Pierre, F-22300 Lannion (FR)
(74) Mandataire: Maillet, Alain

(56) Documents cités:
- EP-A- 0 298 793
- EP-A- 0 422 549
- EP-A- 0 438 009
- EP-A- 0 498 092
- EP-A- 0 504 082
- IEEE JOURNAL OF SOLID-STATE CIRCUITS vol. 27, no. 11 , Novembre 1992 , NEW YORK US pages 1634 - 1643 CHAO ET AL. 'A VLSI Sequencer Chip for ATM Traffic Shaper and Queue Manager'

## Description

La présente invention concerne un procédé pour espacer temporellement avec une période donnée les émissions de cellules appartenant à des messages ainsi que des dispositifs pour la mise en oeuvre d'un tel procédé.

Le but de l'invention est de proposer un dispositif qui s'intègre à un système qui transforme un message en une pluralité de cellules, encore appelé celluliseur, et qui permet d'espacer temporellement les émissions des cellules les unes des autres d'une durée prédéterminée.

Une pluralité de messages se trouve stockée dans une mémoire dite mémoire de messages et chacun d'eux est prévu pour être émis à un moment prédéterminé et dans une direction prédéterminée. A chaque message, est associé un circuit virtuel de communication auquel est affecté un numéro de circuit virtuel, noté ci-après VCI et, à chaque circuit virtuel, correspond un débit de cellules qui est négocié par un protocole, du type nommé dans le domaine de la technique FRP.

Le problème qui se pose est de fournir une référence de temps périodique pour l'émission des cellules appartenant au même message. Comme le débit affecté à chaque circuit virtuel dépend précisément de ce circuit virtuel, et par conséquent de son numéro VCI, ainsi que de la négociation FRP, les périodes associées à chaque message seront différentes. Il est donc nécessaire de réveiller périodiquement l'émission des cellules d'un message donné tout en surveillant l'ensemble des messages.

Le but de la présente invention est donc de proposer un dispositif d'espacement qui permette de résoudre ce problème et, pour ce faire, qui est chargé de fournir les heures de réveil à une unité de gestion dont la fonction essentielle est de commander l'émission d'une cellule donnée d'un message donné à un moment déterminé par le dispositif d'espacement.

On connaît déjà des dispositifs qui sont fondés sur l'utilisation d'une pluralité de compteurs indépendants les uns des autres, un compteur étant affecté à un message donné. Le débordement d'un compteur commande l'envoi d'une cellule du message correspondant. Ces dispositifs peuvent devenir coûteux si le nombre de messages à traiter est élevé. De plus, ils nécessitent de résoudre le problème des conflits qui peuvent avoir lieu lorsque plusieurs compteurs débordent dans le même intervalle de temps.

On connaît également des dispositifs qui utilisent, comme les précédents, des compteurs, mais ceux-ci sont réalisés au moyen d'une mémoire prévue pour stocker des valeurs de comptage associées à des messages et d'additionneurs prévus pour mettre à jour, à chaque émission d'une cellule d'un message déterminé, la valeur de comptage associée à ce message. Néanmoins, là aussi, un nombre de messages élevé implique l'utilisation d'une mémoire au nombre de cases élévé et une difficulté pour incrémenter toutes les cases en temps voulu. De plus, le débordement de chaque valeur de comptage est difficile à vérifier.

Des dispositifs connus sont décrits dans les documents EP-A-0 504 082 et EP-A-0 438 009.

L'invention propose donc un procédé pour espacer temporellement des cellules qui permette de résoudre les différents problèmes évoqués jusqu'ici.

A cet effet, le procédé de l'invention est remarquable en ce qu'il consiste:
- pendant une phase d'initialisation de l'émission d'un message, à stocker, dans une case d'une mémoire d'adresse, la valeur de l'adresse dans ladite mémoire de messages de la première cellule dudit message en relation avec son heure d'émission, puis
- à chaque temps donné par une heure locale,
   - à lire la valeur d'adresse qui est contenue dans la case de la mémoire d'adresse et qui est en relation avec ladite heure locale,
   - à commander l'émission de la cellule ayant ladite adresse dans la mémoire de messages,
   - à calculer, par addition, d'une part, de la période affectée au message auquel appartient ladite cellule et, d'autre part, de l'heure d'émission de ladite cellule, l'heure d'émission de la prochaine cellule dudit message,
   - à déterminer l'adresse de la prochaine cellule dudit message par incrémentation de l'adresse de ladite cellule courante, et
   - à stocker la valeur d'adresse de la prochaine cellule ainsi déterminée dans une case de la mémoire d'adresse en relation avec son heure d'émission ainsi calculée.

Selon une autre caractéristique de l'invention, la mise en relation d'une valeur d'adresse et d'une heure est effectuée par adressage d'une case de la mémoire d'adresse avec un signal représentatif de ladite heure, le contenu de ladite case étant ladite valeur d'adresse.

Selon une autre caractéristique de l'invention alternative de la précédente, la mise en relation d'une valeur d'adresse et d'une heure est effectuée en stockant ladite valeur et ladite heure dans deux champs d'une même case de ladite mémoire d'adresse.

Selon une autre caractéristique de l'invention, le stockage dans ladite mémoire d'adresse est effectué dans une case dont l'adresse est la première adresse non occupée à partir de l'adresse correspondant à l'heure d'émission de la cellule concernée.

La présente invention concerne également un dispositif pour espacer temporellement avec une période donnée les émissions de cellules appartenant à des messages, lesdits messages étant stockés dans une mémoire de messages de manière que leurs cellules soient stockées à des adresses consécutives de ladite mémoire de messages, une période étant affectée à chaque message, ledit dispositif étant destiné à la mise en oeuvre du procédé ci-dessus.

Dans un premier mode de réalisation, il comporte:
- une mémoire d'adresse dans les cases de laquelle sont stockées, à des adresses correspondant respectivement aux heures d'émission des cellules correspondantes, les valeurs des adresses dans ladite mémoire de messages des cellules à émettre,
- une base de temps prévue pour adresser en lecture ladite mémoire d'adresse avec un signal d'adresse correspondant à une heure locale, ladite mémoire d'adresse délivrant alors la valeur d'une adresse de la mémoire de messages,
- une unité de gestion prévue pour recevoir ladite valeur d'adresse lue et commandant en même temps l'émission de la cellule stockée à ladite adresse de la mémoire de messages,
- une mémoire de traduction dans chaque case de laquelle sont stockées, d'une part, la période affectée à un numéro de circuit virtuel donné et, d'autre part, l'heure d'émission de la prochaine cellule à émettre du message porté par ledit circuit virtuel, l'adresse de chaque case correspondant au numéro dudit circuit virtuel, ladite unité de gestion adressant ladite mémoire de traduction en lecture avec le numéro de circuit virtuel auquel appartient la cellule qui vient d'être émise et ladite mémoire de traduction délivrant ladite période et ladite heure d'émission correspondante,
- un additionneur qui additionne ladite période et ladite heure d'émission délivrées par la mémoire de traduction et qui calcule l'heure d'émission de la prochaine cellule, l'unité de gestion déterminant la valeur d'adresse de la prochaine cellule à émettre, ledit additionneur étant prévu pour adresser ladite mémoire d'adresse en écriture avec ladite heure d'émission calculée en vue de l'écriture dans ladite mémoire d'adresse de ladite valeur d'adresse ainsi déterminée.

Selon une autre caractéristique de l'invention, il comporte en outre des moyens prévus pour permettre l'écriture dans une case de la mémoire d'adresse de ladite valeur d'adresse de ladite prochaine cellule à la première adresse non occupée à partir de l'adresse correspondant à l'heure d'émission determinée par ledit additionneur.

Selon un autre mode de réalisation, il comporte:
- une mémoire associative comprenant une pluralité de cases de mémorisation dont chacune est divisée en un premier champ destiné à contenir la valeur d'une adresse dans ladite mémoire de messages d'une cellule d'un message à émettre, en un second champ destiné à contenir l'heure d'émission de la prochaine cellule dudit message, en un troisième champ contenant un élément binaire d'occupation et en un quatrième champ contenant un élément binaire de comparaison dont l'état est représentatif du résultat de la comparaison entre la valeur contenue dans le second champ et la valeur qui est présente sur une entrée dite de recherche de ladite mémoire,
- une base de temps prévue pour délivrer à ladite entrée de recherche de ladite mémoire un signal d'heure locale, ladite mémoire positionnée alors en lecture délivrant la valeur d'adresse contenue dans le premier champ de la case dont l'adresse est la première adresse à partir d'une adresse prédéterminée et dont l'élément binaire de comparaison marque une égalité entre ledit signal d'heure locale présent sur son entrée de recherche et le contenu de son second champ,
- une unité de gestion prévue pour recevoir ladite valeur d'adresse lue et pour commander en même temps l'émission de la cellule stockée à ladite adresse de la mémoire de messages,
- une mémoire de traduction dans chaque case de laquelle sont stockées, d'une part, la période affectée à un numéro de circuit virtuel donné et, d'autre part, l'heure d'émission de la prochaine cellule à émettre du message porté par ledit circuit virtuel, l'adresse de chaque case correspondant au numéro dudit circuit virtuel, ladite unité de gestion adressant ladite mémoire de traduction en lecture avec le numéro de circuit virtuel auquel appartient la cellule qui vient d'être émise et ladite mémoire de traduction délivrant ladite période et ladite heure d'émission correspondante,
- un additionneur qui additionne ladite période et ladite heure d'émission, qui calcule l'heure d'émission de la prochaine cellule et qui la délivre à ladite mémoire d'adresse pour écriture dans le second champ d'une case, l'unité de gestion déterminant la valeur d'adresse de la prochaine cellule à émettre et la délivrant à ladite mémoire d'adresse pour écriture dans le premier champ de ladite case, ladite case étant la case dont l'adresse est la première à partir d'une adresse prédéterminée et dont l'élément binaire d'occupation présente un état marquant une disponibilité.

Selon une autre caractéristique de l'invention, il comporte en outre un circuit de sommation pour délivrer un signal représentatif du nombre d'éléments binaires de comparaison marquant une égalité entre le second champ des cases de ladite mémoire et la valeur présente sur l'entrée de recherche de ladite mémoire, une file du type premier entrée-premier sortie dans laquelle sont stockés, pendant un premier temps de commande de la lecture de ladite mémoire, d'une part, l'heure d'émission délivrée par ladite mémoire et, d'autre part, le nombre délivré par ledit circuit de sommation, le signal d'heure locale étant présent à l'entrée de recherche de ladite mémoire pendant ledit premier temps, un registre qui est chargé avec la valeur délivrée par ladite file lorsque celle-ci est en lecture et un décompteur qui est initialisé avec la valeur du nombre délivré par la file lorsqu'elle est en lecture et qui est décrémenté d'une unité à chaque lecture du registre, la file étant en lecture lorsque le décompteur atteint un compte nul, le registre étant lu pour délivrer le signal d'heure à l'entrée de recherche de ladite mémoire lors d'un second temps de la commande en lecture de ladite mémoire.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un premier mode de réalisation d'un dispositif prévu pour pouvoir mettre en oeuvre le procédé de l'invention exposé ci-dessus,
la Fig. 2 est un schéma synoptique d'un second mode de réalisation d'un dispositif prévu pour pouvoir mettre en oeuvre le procédé de l'invention exposé ci-dessus, et
la Fig. 3 est le schéma synoptique d'une mémoire associative qui est utilisée dans le dispositif du second mode de réalisation de l'invention.

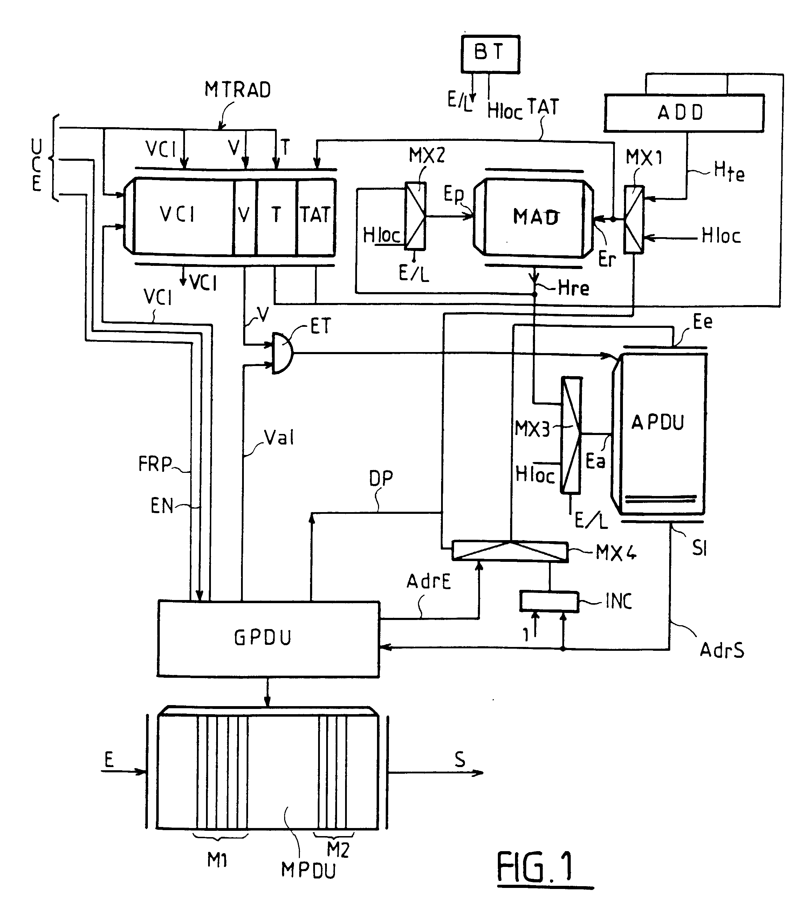

Le dispositif d'espacement représenté à la Fig. 1 comprend une mémoire de messages MPDU dans laquelle sont stockés des messages, par exemple M1, M2. Chaque message est divisé en plusieurs cellules dont chacune occupe une case de la mémoire MPDU. Les cases d'un même message sont consécutives. La mémoire MPDU comporte une entrée E pour le stockage des messages et une sortie S sur laquelle sont émises les cellules des messages stockés.

Comme cela a déjà été mentionné dans le préambule de la présente description, l'invention consiste à prévoir des moyens qui permettent l'émission des cellules avec un débit spécifique qui dépend du numéro VCI de circuit virtuel auquel elles appartiennent.

Pour ce faire, la mémoire MPDU est reliée à une unité de gestion GPDU dont la fonction principale est de fournir à ladite mémoire MPDU l'adresse d'une case à lire pour en délivrer son contenu sur la sortie S de la mémoire MPDU.

Le dispositif d'espacement représenté à la Fig. 1 comprend une mémoire de traduction MTRAD qui comporte autant de cases de mémorisation que le dispositif peut traiter de numéros de VCI. Chaque case est subdivisée en au moins trois champs: un premier champ T qui contient une valeur représentative de la période T entre les émissions de deux cellules consécutives d'un même message associé au circuit virtuel correspondant, un second champ qui contient une valeur représentative de l'heure théorique d'émission TAT de la prochaine cellule composant un message associé au circuit virtuel correspondant, et un troisième champ qui contient un bit de validation V dont la fonction sera explicitée ci-dessous.

Un champ VCI peut également être prévu pour mémoriser le numéro de VCI associé à une case de la mémoire MTRAD.

La mémoire MTRAD est prévue pour recevoir, d'une unité de commande UCE externe au dispositif de l'invention, sur ses entrées d'écriture, des données respectivement représentatives du numéro de VCI, de la période T et du bit de validation d'émission V. Elle reçoit également, sur son entrée d'adressage, le numéro de VCI, ceci en vu de stocker les données sur ses entrées d'écriture à l'adresse de la mémoire MTRAD désignée par le numéro de VCI.

L'unité de gestion GPDU est reliée à l'entrée d'adressage de la mémoire MTRAD afin d'y délivrer un numéro de VCI. La mémoire MTRAD délivre alors sur ses sorties de lecture les valeurs VCI, T, TAT et V qui correspondent au numéro VCI de circuit virtuel de la case ainsi adressée.

Les sorties délivrant les valeurs T et TAT sont respectivement reliées aux entrées d'un additionneur ADD dont la sortie est reliée à une première entrée d'un multiplexeur MX1 pour délivrer le signal Hte à l'heure théorique d'émission. La seconde entrée du multiplexeur MX1 est reliée à la sortie d'une base de temps BT pour y recevoir un signal d'heure locale Hloc. La sortie du multiplexeur MX1 est reliée à une entrée d'écriture de la mémoire MTRAD pour une écriture dans le champ qui contient la valeur TAT. Cette sortie du multiplexeur MX1 est également reliée à une entrée de recherche Er d'une mémoire de recherche d'adresse disponible MAD.

Le multiplexeur MX1 est commandé par un signal DP engendré par l'unité de gestion GPDU.

La mémoire MAD est une mémoire vive à accès aléatoire dont chaque case a une capacité de un bit et est prévue pour marquer un état de disponibilité ou d'occupation. Le bit de chaque case de la mémoire MAD peut être positionné par commande d'une entrée de positionnement Ep de ladite mémoire. La mémoire MAD est prévue pour explorer une à une ses propres cases et, ce, à partir de l'adresse qui est présente sur son entrée de recherche Er et pour délivrer, sur sa sortie, l'adresse de la première case à partir de l'adresse présente sur son entrée de recherche Er dont le bit marque un état disponible.

Une telle mémoire est par exemple décrite dans le brevet français n° 87 09068.

La mémoire MAD a sa sortie de lecture qui est reliée à une entrée d'un multiplexeur MX2 dont l'autre entrée reçoit le signal d'heure locale Hloc. Le multiplexeur MX2 a une entrée de commande qui reçoit un signal E/L engendré par la base de temps BT.

Le signal E/L comporte deux états: un premier état, dit d'écriture, et un second état dit de lecture. Ces deux états alternent avec une périodicité qui correspond à l'unité de temps du signal Hloc de la base de temps BT.

La mémoire MAD reçoit, sur son entrée de recherche Er, le signal TAT et délivre, sur sa sortie de lecture, un signal dit d'heure réelle d'émission Hre. Le signal Hre est présent sur l'entrée du multiplexeur MX2 et, le signal E/L étant dans son état d'écriture, également sur l'entrée de positionnement Ep de la mémoire MAD, ce qui positionne le bit de la case d'adresse Hre afin qu'il marque un état d'occupation. Lorsque le signal E/L est dans son état de lecture, le multiplexeur MX2 délivre à la mémoire MAD le signal Hloc et celle-ci positionne le bit de la case d'adresse Hloc afin qu'il marque un état de disponibilité.

La sortie de la mémoire MAD est également reliée à une première entrée d'un multiplexeur MX3 dont une seconde entrée reçoit le signal d'heure locale Hloc. La sortie du multiplexeur MX3 est reliée à l'entrée d'adressage Ea d'une mémoire APDU du type mémoire vive à accès aléatoire qui comporte autant de cases de mémorisation que la mémoire MAD. Ainsi, chaque case de la mémoire MAD est en relation biunivoque avec une case de la mémoire APDU. Le multiplexeur MX3 est commandé par le signal E/L issu de la base de temps BT.

La mémoire APDU est prévue pour délivrer, sur sa sortie de lecture S1, à l'unité de gestion GPDU, l'adresse AdrS qui est ensuite délivrée à la mémoire MPDU pour l'émission de la cellule désignée par cette adresse.

L'entrée d'écriture Ee de la mémoire APDU est reliée à la sortie d'un multiplexeur MX4 dont une première entrée est reliée à une sortie AdrE de l'unité de gestion GPDU et dont l'autre entrée est reliée à la sortie d'un additionneur INC prévu pour additionner la valeur un au signal AdrS présent sur son entrée. Le multiplexeur MX4 est commandé par le signal DP issu de l'unité de gestion GPDU.

Une porte ET reçoit, sur une première entrée, le signal V engendré par la mémoire MTRAD et, sur une seconde entrée, le signal Val engendré par l'unité de gestion GPDU. La sortie de la porte ET est reliée à une entrée de validation de la mémoire APDU pour autoriser ou non son fonctionnement en lecture.

L'unité de gestion GPDU est prévue, d'une part, pour délivrer, à l'unité externe UCE, un signal de demande de réservation de ressources FRP et, d'autre part, pour recevoir de l'unité UCE, un signal d'acquittement de réservation de ressources EN.

Le fonctionnement du dispositif de l'invention est le suivant.

Lorsqu'un message est à émettre de la mémoire MPDU, l'unité de gestion GPDU envoie un signal de demande de réservation FRP à l'unité externe UCE et celle-ci y répond en transmettant, d'une part, un signal d'acquittement de réservation de ressources EN, et, d'autre part, les données suivantes concernant ce message à émettre: le numéro de VCI affecté au message, la valeur de la période T correspondant au débit des cellules qui composent ce message ainsi que le signal de validation V qui est positionné à un niveau égal à un. L'ensemble de ces données est stocké en même temps dans la mémoire MTRAD à une adresse correspondant au numéro de VCI du message.

Après avoir reçu le signal d'acquittement EN, l'unité de gestion GPDU délivre l'adresse AdrE de la mémoire MPDU de la première cellule du message en cours de traitement. Elle positionne également le bit de commande DP de manière que le multiplexeur MX1 délivre le signal Hloc à l'entrée Er de la mémoire MAD et à l'entrée TAT de la mémoire MTRAD et que le multiplexeur MX4 délivre le signal d'adresse AdrE à l'entrée d'écriture Ee de la mémoire APDU.

Ainsi, la valeur du signal TAT prend la valeur Hloc et est stockée dans la mémoire MTRAD à l'adresse correspondant au numéro de VCI concerné. La mémoire MAD fournit l'heure réelle d'émission Hre correspondant à la première adresse de la mémoire MAD à partir de l'adresse correspondant à l'heure locale Hloc qui est non-occupée.

Ces opérations ont lieu alors que le signal E/L est positionné en écriture, c'est-à-dire de manière que le multiplexeur MX2 délivre le signal Hre à l'entrée Ep de la mémoire MAD et que le multiplexeur MX3 délivre ce même signal Hre à l'entrée d'adressage Ea de la mémoire APDU. Ainsi, la case de la mémoire MAD dont l'adresse correspond à Hre est positionnée pour marquer son occupation et l'adresse AdrE est stockée dans la mémoire APDU à l'adresse qui correspond à l'heure réelle d'émission Hre.

Le processus d'émission des cellules du message est alors initialisé.

Les émissions proprement dites des cellules des messages sont effectuées selon des cycles qui sont rythmés par le signal E/L délivré par la base de temps BT. Pour ces cycles, le signal DP est positionné de manière que le multiplexeur MX1 délivre le signal d'heure théorique d'émission Hte à l'entrée de la mémoire MTRAD et à l'entrée Er de la mémoire MAD et que le multiplexeur MX4 délivre à l'entrée Ee de la mémoire APDU le signal d'adresse issu de l'additionneur INC.

Lorsque le signal E/L est en lecture, le multiplexeur MX2 délivre le signal d'heure locale Hloc à l'entrée de la mémoire MAD et le multiplexeur MX3 délivre également le signal Hloc à la mémoire APDU.

La mémoire APDU délivre alors le signal d'adresse AdrS qui est stocké à l'adresse Hloc. L'adresse AdrS correspond à l'adresse de la mémoire MPDU de la cellule à émettre à l'instant correspondant à l'heure donnée par le signal Hloc. A la réception de ce signal d'adresse AdrS, l'unité de gestion GPDU commande la mémoire MPDU afin qu'elle émette la cellule d'adresse AdrS sur sa sortie S. L'unité de gestion GPDU positionne le numéro de VCI correspondant à la cellule concernée à l'entrée de la mémoire MTRAD. Celle-ci délivre donc la valeur de la période T et la valeur de TAT correspondant à l'heure réelle d'émission de la cellule courante à l'additionneur ADD qui calcule alors l'heure théorique d'émission Hte de la prochaine cellule appartenant au même circuit virtuel de numéro VCI.

On notera que la case de la mémoire MAD d'adresse Hre est positionnée pour marquer sa disponibilité.

Le signal E/L passe en écriture.

Le signal Hte calculé par l'additionneur ADD est alors stocké dans le champ TAT de la mémoire MTRAD et est délivré à l'entrée Er de la mémoire MAD. La mémoire MAD délivre alors la première adresse non-occupée à partir de l'adresse correspondant à l'heure théorique d'émission Hte. Cette adresse représente l'heure réelle d'émission Hre de la prochaine cellule du message courant.

Le multiplexeur MX2 délivre le signal Hre à la mémoire MAD et le multiplexeur MX3 délivre également le signal Hre à la mémoire APDU.

La case de la mémoire MAD d'adresse correspondant à la valeur du signal Hre est positionnée afin de marquer un état d'occupation.

Quant au multiplexeur MX4, il délivre le signal d'adresse AdrS + 1 calculé par l'additionneur INC à l'entrée d'écriture Ee de la mémoire APDU. Ce signal d'adresse est alors stocké dans la mémoire APDU à l'adresse correspondant à l'heure réelle d'émission Hre.

Les cycles lecture/écriture, rythmés par le signal E/L délivré par la base de temps BT, se poursuivent jusqu'à ce que la dernière cellule du message soit émise. L'unité de gestion GPDU inhibe alors le processus en positionnant le bit V de la mémoire MTRAD à zéro. La porte ET a sa sortie qui est alors positionnée à zéro ce qui inhibe le fonctionnement de la mémoire APDU.

On a représenté un seconde mode de réalisation d'un dispositif d'espacement selon l'invention qui reprend le même concept que le précédent mode de réalisation.

Ce dispositif d'espacement comprend, comme le dispositif du premier mode de réalisation, une mémoire MPDU, une unité de gestion GPDU, une mémoire MTRAD, un additionneur ADD, un multiplexeur MX1, un multiplexeur MX4 et une base de temps BT.

Ces éléments remplissent la même fonction que dans le dispositif du premier mode. La base de temps BT délivre, outre le signal d'heure locale Hloc, des signaux t1, t2 et t3 qui sont des subdivisions temporelles de l'unité de temps du signal Hloc de la base de temps BT.

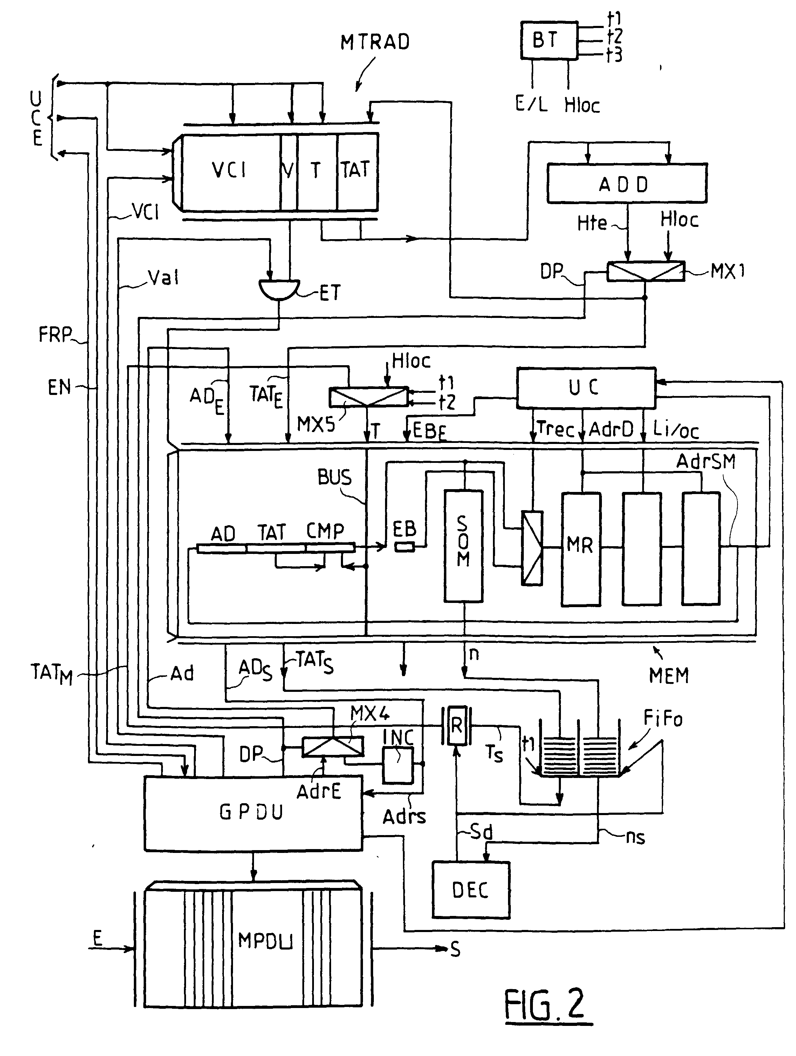

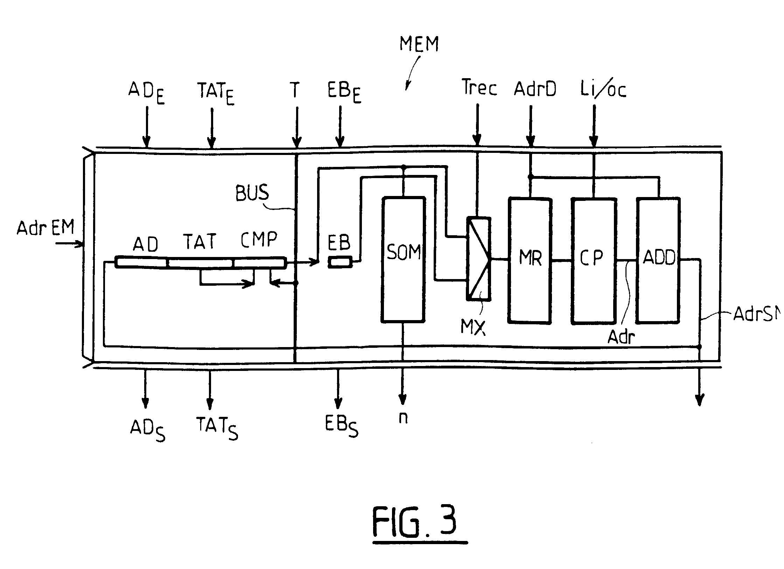

Le dispositif de la Fig. 2 comporte une mémoire MEM, dite mémoire associative dont un schéma synoptique est représenté à la Fig. 3.

La mémoire associative MEM représentée à la Fig. 3 comprend un certain nombre de cases de mémorisation dont chacune est divisée en au moins quatre champs: un champ destiné à contenir une donnée d'information AD, un champ destiné à contenir une valeur TAT qui est associée à la donnée d'information AD, un élément binaire d'occupation EB représentatif de l'état d'occupation de la case concernée, et un élément binaire de comparaison CMP représentatif du résultat de la comparaison entre la valeur TAT et la valeur T qui est présente sur un bus BUS.

Les valeurs des champs AD, TAT et EB peuvent être directement écrites dans une case en présentant, d'une part, l'adresse AdrEM de cette case à une entrée de la mémoire MEM et, d'autre part, ces valeurs respectivement sur des entrées AD_{E}, TAT_{E} et EB_{E} de la mémoire MEM.

Par ailleurs, les valeurs contenues dans les champs AD, TAT et EB peuvent être directement lues dans une case en présentant l'adresse AdrEM de cette case à l'entrée de la mémoire MEM et en lisant ces valeurs sur des sorties AD_{S}, TAT_{S} et EB_{S} de la mémoire MEM.

Elle comporte encore une matrice de rotation MR qui comporte un nombre d'entrées égal au nombre de cases de la mémoire MEM. Ces entrées sont reliées aux sorties d'un multiplexeur MX comportant deux groupes d'entrées respectivement destinées à recevoir les valeurs des éléments binaires CMP et EB de toutes les cases de la mémoire MEM. Le multiplexeur MX comporte une entrée de commande portant un signal binaire Trec. Lorsque celui-ci est dans un premier état, les valeurs de tous les éléments CMP se retrouvent en sortie du multiplexeur MX et donc sur les entrées de la matrice de rotation MR. Par contre, lorsqu'il est dans un second état, ce sont les valeurs de tous les éléments EB qui se retrouvent en sortie du multiplexeur MX et donc sur les entrées de la matrice de rotation MR.

La matrice de rotation MR reçoit un signal portant une adresse de début de recherche AdrD.

Elle comporte un nombre de sorties égal au nombre d'entrées. Les valeurs prises par les sorties de la matrice MR sont celles qui sont prises par ses entrées, dans le même ordre mais avec une origine décalée d'un nombre égal à AdrD. Ainsi, la première sortie recopie la valeur de l'entrée d'adresse AdrD, la seconde sortie recopie la valeur de l'entrée d'adresse AdrD + 1, etc.

Elle comporte encore un codeur CP dont les entrées sont respectivement reliées aux sorties de la matrice de rotation MR. Le codeur CP comporte également une entrée de commande qui porte un élément binaire Li/Oc. Le codeur CP calcule la première adresse Adr, à partir de sa première entrée, de l'entrée qui reçoit une valeur égale à celle de l'élément binaire Li/Oc. Cette adresse Adr est délivrée sur une sortie du codeur CP et est fournie à une première entrée d'un additionneur ADD dont la seconde entrée reçoit le signal de commande AdrD. La sortie de l'additionneur ADD fournie l'adresse AdrSM.

Elle comprend encore un circuit SOM dont les entrées reçoivent respectivement les valeurs des champs CMP de toutes les cases de la mémoire MEM et qui calcule le nombre n d'éléments CMP représentatifs d'une égalité entre la valeur TAT du contenu des cases et la valeur T présente sur le bus BUS. Ce nombre n est disponible sur une sortie de la mémoire MEM.

Le fonctionnement de la mémoire MEM selon l'invention est le suivant.

Dans un premier mode, elle gère la disponibilité de ressources externes. Pour cela, on positionne l'entrée Trec de manière que l'ensemble des valeurs des éléments binaires EB se retrouve à l'entrée de la matrice de rotation MR. Le signal d'adresse AdrD est égal à la valeur de l'adresse à partir de laquelle on effectue la recherche de disponibilité. Le signal Li/Oc est égal à la valeur binaire qui est utilisée par l'élément EB pour marquer un état d'occupation d'une case.

L'adresse Adr délivrée par le codeur CP correspond alors à la première adresse à la sortie de la matrice de rotation MR pour laquelle la valeur de EB est égale à la valeur de Li/Oc. L'adresse AdrS est la somme de l'adresse Adr et de l'adresse AdrD. On comprendra qu'elle correspond à la première adresse de la case de la mémoire MEM à partir de l'adresse AdrD et pour laquelle la valeur de EB est égale à la valeur de Li/Oc, c'est-à-dire pour laquelle l'élément binaire EB marque un état d'occupation de la case.

Dans un second mode de fonctionnement, elle est utilisée en mémoire associative en lecture. Pour cela, on positionne d'abord une valeur T sur le bus BUS, valeur correspondant à la valeur prise par le champ TAT des cases dont les adresses sont recherchées. L'entrée Trec est positionnée de manière que l'ensemble des valeurs des éléments binaires CMP se retrouve à l'entrée de la matrice de rotation MR.

Le signal d'adresse AdrD est égale à la valeur de l'adresse à partir de laquelle on effectue la recherche. Le signal Li/Oc est positionné à une valeur égale à la valeur binaire qui est utilisée par l'élément CMP pour marquer une égalité.

L'adresse Adr délivrée par le codeur CP correspond alors à la première adresse à la sortie de la matrice de rotation MR pour laquelle la valeur de CMP est égale à la valeur de Li/Oc. L'adresse AdrS est la somme de l'adresse Adr et de l'adresse AdrD. On comprendra qu'elle correspond à la première adresse de la case de la mémoire à partir de l'adresse AdrD et pour laquelle la valeur de CMP est égale à la valeur de Li/Oc, c'est-à-dire pour la case de la mémoire MEM dont la valeur prise par le champ TAT est égal à la valeur T.

La mémoire MEM délivre, dans ce mode de fonctionnement, le nombre n d'égalités rencontrées.

Dans un troisième mode de fonctionnement, elle est utilisée en mémoire associative avec adressage externe en écriture. Ce mode de fonctionnement est identique au second mode, mais il est en écriture au lieu d'être en lecture.

En effet, on positionne d'abord une valeur T sur le bus BUS, valeur correspondant à la valeur prise par les champs TAT des cases dont les adresses sont recherchées. L'entrée Trec est positionnée de manière que l'ensemble des valeurs des éléments binaires CMP se retrouve à l'entrée de la matrice de rotation MR.

Le signal d'adresse AdrD est égal à la valeur de l'adresse à partir de laquelle on effectue la recherche. Le signal Li/Oc est positionné à une valeur égale à la valeur binaire qui est utilisée par l'élément CMP pour marquer une égalité.

L'adresse Adr délivrée par le codeur CP correspond alors à la première adresse à la sortie de la matrice de rotation MR pour laquelle la valeur de CMP est égale à la valeur de Li/Oc. L'adresse AdrS est la somme de l'adresse Adr et de l'adresse AdrD. Le signal d'adresse AdrSM est réinjecté, en interne, sur l'entrée d'adresse AdrEM de la mémoire MEM.

Chaque champ AD, TAT, EB d'une case ainsi adressée par AdrEM est chargé avec des valeurs qui sont présentes sur les entrées AD_{E}, TAT_{E} et EB_{E} correspondantes de la mémoire MEM.

La mémoire MEM délivre, dans ce mode de fonctionnement, le nombre n d'égalités rencontrées.

Dans un quatrième mode, elle est utilisée en mémoire associative avec adressage en écriture et avec recherche de la première case disponible. Pour cela, on positionne l'entrée Trec de manière que l'ensemble des valeurs des éléments binaires EB se retrouve à l'entrée de la matrice de rotation MR.

Le signal d'adresse AdrD est égal à la valeur de l'adresse à partir de laquelle on effectue la recherche de disponibilité. Le signal Li/Oc est positionné à une valeur égale à la valeur binaire qui est utilisée par l'élément EB pour marquer un état de non-occupation.

L'adresse Adr délivrée par le codeur CP correspond alors à la première adresse à la sortie de la matrice de rotation MR pour laquelle la valeur de EB est égale à la valeur de Li/Oc. L'adresse AdrS est la somme de l'adresse Adr et de l'adresse AdrD. On comprendra qu'elle correspond à la première adresse de la case de la mémoire MEM à partir de l'adresse AdrD qui n'est pas déjà occupée.

L'adresse AdrSM est réinjectée à l'entrée d'adressage de la mémoire MEM en tant que signal d'adressage AdrEM. Les valeurs sur les entrées AD_{E}, TAT_{E} et EB_{E} sont stockées dans la case dont l'adresse est AdrEM = AdrSM.

Le dispositif d'espacement de la Fig. 2 comporte donc une mémoire associative MEM telle que celle qui vient d'être décrite en relation avec la Fig. 3. L'entrée AD_{E} de cette mémoire est reliée à la sortie du multiplexeur MX4 dont les entrées, on le rappelle, reçoivent respectivement le signal d'adresse AdrE délivré par l'unite GPDU et le signal AdrS + 1 délivré à la sortie d'un additionneur INC. Le multiplexeur MX4 est commandé par le signal DP délivré par l'unité de gestion GPDU. La sortie AD_{S} de la mémoire MEM porte le signal AdrS qui est fourni à l'entrée de l'additionneur INC et à une entrée de l'unité de gestion GPDU.

L'entrée TAT_{E} de la mémoire MEM est reliée à la sortie du multiplexeur MX1. Le multiplexeur MX1 est également commandé par le signal DP délivré par l'unité de gestion GPDU.

Le dispositif d'espacement représenté à la Fig. 3 comprend en outre une double file Fifo dont une première entrée reçoit le signal n délivré par le circuit SOM de la mémoire MEM et dont une seconde entrée reçoit le signal TAT_{S} délivré par la mémoire MEM.

Une première sortie de la file Fifo délivre un nombre nₛ à un décompteur DEC et sa seconde sortie délivre un signal Tₛ à un registre R qui est piloté en écriture lorsqu'un signal de décompte sd nul est délivré par une sortie appropriée du décompteur DEC. Le signal de décompte nul sd issu du décompteur DEC commande également la file Fifo en lecture pour que celle-ci délivre, respectivement au décompteur DEC et au registre R, les valeurs de nₛ et de Tₛ. Le décompteur DEC est ainsi initialisé par la valeur de nₛ et le registre R est chargé par la valeur Tₛ.

La file Fifo est commandée en écriture par le signal d'horloge t₁ issu de la base de temps BT.

L'ensemble file Fifo, décompteur DEC, registre R forme un circuit de mémorisation.

La sortie du registre R, portant le signal référencé TAT_{M}, est reliée à une première entrée d'un multiplexeur MX5 dont une seconde entrée reçoit le signal d'heure locale Hloc. La sortie du multiplexeur MX5 est reliée à l'entrée T de la mémoire MEM. Le multiplexeur MX5 est commandé par les signaux d'horloge t₁ et t₂ engendrés par la base de temps BT.

Le dispositif d'espacement selon ce mode de réalisation comprend encore une unité de commande UC qui est destinée à positionner la mémoire MEM dans un de ses quatre modes de fonctionnement. Pour ce faire, elle est reliée aux entrées EB_{E}, Trec, AdrD et Li/Oc de la mémoire MEM. Elle reçoit également le signal AdrSM de la mémoire MEM ainsi qu'un signal de commande issu de l'unité de gestion GPDU.

Le fonctionnement du dispositif d'espacement de la Fig. 2 est le suivant.

On considérera d'abord la phase d'initialisation pendant laquelle l'unité de gestion GPDU initialise le dispositif d'espacement en vue de l'émission d'un message donné.

Lorsqu'un message est à émettre de la mémoire MPDU, l'unité de gestion GPDU envoie un signal de demande de réservation FRP à l'unité externe UCE et celle-ci y répond en transmettant, d'une part, un signal d'acquittement de réservation de ressources EN, et, d'autre part, les données suivantes concernant ce message à émettre: le numéro de VCI affecté au message, la valeur de la période T correspondant au débit des cellules qui composent ce message ainsi que le signal de validation V qui est positionné à un niveau égal à un. L'ensemble de ces données est stocké en même temps dans la mémoire MTRAD à une adresse correspondant au numéro de VCI du message.

Après avoir reçu le signal d'acquittement EN, l'unité de gestion GPDU délivre à l'entrée du multiplexeur MX4 l'adresse AdrE de la mémoire MPDU de la première cellule du message en cours de traitement. Elle positionne également le bit de commande DP de manière que le multiplexeur MX1 délivre le signal Hloc à l'entrée TAT_{E} de la mémoire MEM et à l'entrée de la mémoire MTRAD et de manière que le multiplexeur MX4 délivre le signal d'adresse AdrE à l'entrée d'écriture AD_{E} de la mémoire MEM. Elle commande également l'unité de commande UC de manière que la mémoire MEM fonctionne selon son quatrième mode. Pour ce faire, l'entrée AdrD de la mémoire MEM reçoit le signal TAT_{E} = Hloc, l'entrée Trec est positionnée de manière que ce soit l'ensemble des valeurs des éléments binaires EB qui se retrouve à l'entrée de la matrice de rotation MR et le signal Li/Oc est positionné à une valeur égale à la valeur binaire qui est utilisée par l'élément EB pour marquer un état de non-occupation.

La mémoire MEM détermine, comme on l'a vu précédemment, la première adresse de la case de la mémoire MEM à partir de l'adresse AdrD qui n'est pas déjà occupée. Cette adresse AdrSM est réinjectée en interne à l'entrée d'adressage AdrEM de la mémoire MEM.

La valeur AdrE et la valeur Hloc sont alors mémorisées dans la mémoire MEM à l'adresse de la première case non-occupée à partir de l'adresse correspondant à TAT_{E} = Hloc. En même temps, le bit EB est positionné, par l'unité UC, à une valeur qui marque un état d'occupation.

Ces opérations ont lieu pendant la phase d'initialisation pendant laquelle le signal DP est actif.

Les émissions proprement dites des cellules des messages sont effectuées selon des cycles qui sont rythmés sur les signaux t1, t2 et t3 issus de la base de temps BT. Pour ces cycles, le signal DP, inversé par rapport à la phase d'initialisation, est positionné de manière que le multiplexeur MX1 délivre le signal d'heure théorique d'émission Hte à l'entrée de la mémoire MTRAD et à l'entrée de la mémoire MEM et de manière que le multiplexeur MX4 délivre le signal d'adresse AdrS + 1 issu de l'additionneur INC.

Pendant le temps t₁ de la base de temps BT, le multiplexeur MX5 est piloté par le signal t₁ de manière à ce que ce soit le signal Hloc d'heure locale qui est appliqué à l'entrée T de la mémoire MEM. Celle-ci est commandée par l'unité UC de manière à ce qu'elle fonctionne selon son second mode. Elle délivre donc le nombre n d'égalités rencontrées, c'est-à-dire le nombre de cases pour lesquelles le contenu du champ TAT est égal à la valeur présente sur le bus BUS, c'est-à-dire, compte tenu du positionnement du multiplexeur MX5, le signal d'horloge locale Hloc. Elle délivre également le signal TAT_{S} correspondant à l'heure locale Hloc. A ce temps t₁, la file Fifo est commandée en écriture si bien que le nombre n et le signal TAT_{S} sont mémorisés dans la double file Fifo.

Pendant le temps t₂ de la base de temps BT, le multiplexeur MX5 est piloté par le signal t₂ de manière à ce que ce soit le signal TAT_{M} issu du registre R qui se retrouve appliqué à l'entrée T de la mémoire MEM.

La mémoire MEM fonctionne encore selon son second mode. Elle délivre donc, sur sa sortie AD_{S}, le signal d'adresse AdrS contenu dans le champ AD de la première case à partir de l'adresse AdrD pour laquelle le contenu du champ TAT est égal à la valeur TAT_{M} issue du registre R. Le signal d'adresse AdrD correspond par exemple à la dernière adresse de la mémoire MEM qui a été lue + 1. Le signal d'adresse AdrS est fourni à l'unité de gestion GPDU qui commande, comme on l'a déjà expliqué, l'émission de la cellule stockée dans la mémoire MPDU à l'adresse AdrS.

On notera que, pendant le temps t₂, si la valeur du décompteur DEC est nulle, les valeurs de Tₛ et de nₛ présentes à la sortie de la file Fifo sont lues dans cette file. Le registre R est alors chargé avec cette valeur de Tₛ et la valeur de nₛ est également chargé dans le décompteur DEC pour l'initialiser.

Par contre, si la valeur du décompteur DEC n'est pas nulle, la valeur de TAT_{M} est conservée dans le registre R.

Pendant le temps t₂, l'unité de gestion GPDU applique à la mémoire MTRAD le numéro VCI de circuit virtuel auquel appartient la cellule qui vient d'être émise. La mémoire MTRAD délivre alors le signal T et le signal TAT stockés dans la mémoire MTRAD à l'adresse correspondant au numéro de VCI. Ces signaux sont fournis à l'additionneur ADD qui calcule alors l'heure théorique Hte d'émission de la prochaine cellule appartenant au même message. Compte tenu de la position du multiplexeur MX1, le signal d'heure Hte se retrouve à l'entrée TAT_{E} de la mémoire MEM.

Pendant le temps t₃, la mémoire MEM est commandée par l'unité UC, de manière à ce qu'elle fonctionne selon son quatrième mode. Elle détermine alors, comme on l'a vu précédemment, la première adresse de la case de la mémoire MEM à partir de l'adresse AdrD qui n'est pas déjà occupée. L'adresse AdrD est par exemple égale à la valeur du signal d'heure théorique d'émission Hte. L'adresse AdrSM déterminée par la mémoire MEM est réinjectée à son entrée d'adressage AdrEM pour écriture, à cette adresse, des valeurs présentes à ces entrées AD_{E} et TAT_{E}, c'est-à-dire respectivement la valeur de AdrS + 1 délivrée, via le multiplexeur MX5, par l'additionneur INC et la valeur de Hte délivrée, via le multiplexeur MX1, par l'additionneur ADD.

Les cycles d'émission se poursuivent jusqu'à ce que la dernière cellule du message soit émise. L'unité de gestion GPDU inhibe alors le processus en positionnant à zéro le bit V de la mémoire MTRAD. La porte ET a sa sortie qui est alors positionnée également à zéro ce qui inhibe le fonctionnement de la mémoire MEM.

## Revendications

1. Procédé pour espacer temporellement avec une période donnée les émissions de cellules appartenant à des messages, lesdits messages étant stockés dans une mémoire de messages de manière que leurs cellules soient stockées à des adresses consécutives de ladite mémoire de messages, une période étant affectée à chaque message, caractérisé en ce qu'il consiste:
- pendant une phase d'initialisation de l'émission d'un message, à stocker, dans une case d'une mémoire d'adresse (APDU), la valeur de l'adresse dans ladite mémoire de messages (MPDU) de la première cellule dudit message en relation avec son heure d'émission (Hre), puis
- à chaque temps donné par une heure locale (Hloc),
- à lire la valeur d'adresse qui est contenue dans la case de la mémoire d'adresse (APDU) et qui est en relation avec ladite heure locale (Hloc),
- à commander l'émission de la cellule ayant ladite adresse dans la mémoire de messages (MPDU),
- à calculer, par addition, d'une part, de la période affectée au message auquel appartient ladite cellule et, d'autre part, de l'heure d'émission de ladite cellule, l'heure d'émission de la prochaine cellule dudit message,
- à déterminer l'adresse de la prochaine cellule dudit message par incrémentation de l'adresse de ladite cellule courante, et
- à stocker la valeur d'adresse de la prochaine cellule ainsi déterminée dans une case de la mémoire d'adresse en relation avec son heure d'émission ainsi calculée.

2. Procédé selon la revendication 1, caractérisé en ce que la mise en relation d'une valeur d'adresse et d'une heure est effectuée par adressage d'une case de la mémoire d'adresse (ADPU) avec un signal représentatif de ladite heure, le contenu de ladite case étant ladite valeur d'adresse (APDU).

3. Procédé selon la revendication 1, caractérisé en ce que la mise en relation d'une valeur d'adresse et d'une heure est effectuée en stockant ladite valeur et ladite heure dans deux champs d'une même case de ladite mémoire d'adresse.

4. Procédé selon une des revendications précédentes, caractérisé en ce que le stockage dans ladite mémoire d'adresse est effectué dans une case dont l'adresse est la première adresse non occupée à partir de l'adresse correspondant à l'heure d'émission de la cellule concernée.

5. Dispositif pour espacer temporellement avec une période donnée les émissions de cellules appartenant à des messages, lesdits messages étant stockés dans une mémoire de messages (MPDU) de manière que leurs cellules soient stockées à des adresses consécutives de ladite mémoire de messages (MPDU), une période (T) étant affectée à chaque message, dispositif destiné à la mise en oeuvre du procédé selon une des revendications 1 à 4, caractérisé en ce qu'il comporte:
- une mémoire d'adresse (APDU) dans les cases de laquelle sont stockées, à des adresses correspondant respectivement aux heures d'émission (Hre) des cellules correspondantes, les valeurs des adresses dans ladite mémoire de messages des cellules à émettre,
- une base de temps (BT) prévue pour adresser en lecture ladite mémoire d'adresse avec un signal d'adresse (Hloc) correspondant à une heure locale, ladite mémoire d'adresse (APDU) délivrant alors la valeur d'une adresse (AdrS) de la mémoire de messages (MPDU),
- une unité de gestion (GPDU) prévue pour recevoir ladite valeur d'adresse lue (AdrS) et commandant en même temps l'émission de la cellule stockée à ladite adresse (AdrS) de la mémoire de messages (MPDU),
- une mémoire de traduction (MTRAD) dans chaque case de laquelle sont stockées, d'une part, la période (T) affectée à un numéro de circuit virtuel (VCI) donné et, d'autre part, l'heure d'émission (TAT) de la prochaine cellule à émettre du message porté par ledit circuit virtuel (VCI), l'adresse de chaque case correspondant au numéro dudit circuit virtuel (VCI), ladite unité de gestion (GPDU) adressant ladite mémoire de traduction (MTRAD) en lecture avec le numéro de circuit virtuel (VCI) auquel appartient la cellule qui vient d'être émise et ladite mémoire de traduction (MTRAD) délivrant ladite période (T) et ladite heure d'émission (TAT) correspondante,
- un additionneur (ADD) qui additionne ladite période (T) et ladite heure d'émission (TAT) délivrées par la mémoire de traduction (MTRAD) et qui calcule l'heure d'émission (Hte) de la prochaine cellule, l'unité de gestion (GPDU) déterminant la valeur d'adresse (AdrS + 1) de la prochaine cellule à émettre, ledit additionneur (ADD) étant prévu pour adresser ladite mémoire d'adresse (APDU) en écriture avec ladite heure d'émission (Hte) calculée en vue de l'écriture dans ladite mémoire d'adresse de ladite valeur d'adresse (AdrS + 1) ainsi déterminée.

6. Dispositif selon la revendication 5, caractérisé en ce qu'il comporte en outre des moyens (MAD) prévus pour permettre l'écriture dans une case de la mémoire d'adresse (APDU) de ladite valeur d'adresse de ladite prochaine cellule à la première adresse non occupée à partir de l'adresse correspondant à l'heure d'émission déterminée par ledit additionneur (ADD).

7. Dispositif pour espacer temporellement avec une période donnée les émissions de cellules appartenant à des messages, lesdits messages étant stockés dans une mémoire de messages (MPDU) de manière que leurs cellules soient stockées à des adresses consécutives de ladite mémoire de messages (MPDU), une période (T) étant affectée à chaque message, dispositif destiné à la mise en oeuvre du procédé selon une des revendications 1 à 4, caractérisé en ce qu'il comporte:
- une mémoire d'adresse (MEM) du type mémoire associative comprenant une pluralité de cases de mémorisation dont chacune est divisée en un premier champ destiné à contenir la valeur (AD) d'une adresse dans ladite mémoire de messages (MPDU) d'une cellule d'un message à émettre, en un second champ destiné à contenir l'heure d'émission (TAT) de la prochaine cellule dudit message, en un troisième champ contenant un élément binaire d'occupation (EB) et en un quatrième champ contenant un élément binaire de comparaison (CMP) dont l'état est représentatif du résultat de la comparaison entre la valeur (TAT) contenue dans le second champ et la valeur qui est présente sur une entrée (T) dite de recherche de ladite mémoire (MEM),
- une base de temps (BT) prévue pour délivrer à ladite entrée de recherche (T) de ladite mémoire (MEM) un signal d'heure locale (Hloc), ladite mémoire (MEM) positionnée alors en lecture délivrant la valeur d'adresse (AdrS) contenue dans le premier champ de la case dont l'adresse est la première adresse à partir d'une adresse prédéterminée et dont l'élément binaire de comparaison (CMP) marque une égalité entre ledit signal d'heure locale (Hloc) présent sur son entrée de recherche (T) et le contenu (TAT) de son second champ,
- une unité de gestion (GPDU) prévue pour recevoir ladite valeur d'adresse lue (AdrS) et pour commander en même temps l'émission de la cellule stockée à ladite adresse de la mémoire de messages (MPDU),
- une mémoire de traduction (MTRAD) dans chaque case de laquelle sont stockées, d'une part, la période (T) affectée à un numéro de circuit virtuel (VCI) donné et, d'autre part, l'heure d'émission (TAT) de la prochaine cellule à émettre du message porté par ledit circuit virtuel (VCI), l'adresse de chaque case correspondant au numéro dudit circuit virtuel (VCI), ladite unité de gestion (GPDU) adressant ladite mémoire de traduction (MTRAD) en lecture avec le numéro de circuit virtuel (VCI) auquel appartient la cellule qui vient d'être émise et ladite mémoire de traduction (MTRAD) délivrant ladite période (T) et ladite heure d'émission (TAT) correspondante,
- un additionneur (ADD) qui additionne ladite période (T) et ladite heure d'émission (TAT), qui calcule l'heure d'émission (Hte) de la prochaine cellule et qui la délivre à ladite mémoire d'adresse (MEM) pour écriture dans le second champ d'une case, l'unité de gestion (GPDU) déterminant la valeur d'adresse (AdrS + 1) de la prochaine cellule à émettre et la délivrant à ladite mémoire d'adresse (MEM) pour écriture dans le premier champ de ladite case, ladite case étant la case dont l'adresse est la première à partir d'une adresse prédéterminée et dont l'élément binaire d'occupation (EB) présente un état marquant une disponibilité.

8. Dispositif selon la revendication 7, caractérisé en ce qu'il comporte en outre un circuit de sommation (SOM) pour délivrer un signal représentatif du nombre d'éléments binaires de comparaison (CMP) marquant une égalité entre le contenu (TAT) du second champ des cases de ladite mémoire (MEM) et la valeur présente sur l'entrée de recherche (T) de ladite mémoire (MEM), une file (Fifo) du type premier entrée-premier sortie dans laquelle sont stockés, pendant un premier temps (t₁) de commande de la lecture de ladite mémoire (MEM), d'une part, l'heure d'émission (TAT_{S}) délivrée par ladite mémoire (MEM) et, d'autre part, le nombre (nₛ) délivré par ledit circuit de sommation (SOM), le signal d'heure locale (Hloc) étant présent à l'entrée de recherche (T) de ladite mémoire (MEM) pendant ledit premier temps (t₁), un registre (R) qui est chargé avec la valeur délivrée par ladite file (Fifo) lorsque celle-ci est en lecture et un décompteur (DEC) qui est initialisé avec la valeur (nₛ) du nombre délivré par la file (Fifo) lorsqu'elle est en lecture et qui est décrémenté d'une unité à chaque lecture du registre (R), la file (Fifo) étant en lecture lorsque le décompteur (DEC) atteint un compte nul, le registre (R) étant lu pour délivrer le signal d'heure (TAT_{M}) à l'entrée de recherche (T) de ladite mémoire (MEM) lors d'un second temps (t₂) de la commande en lecture de ladite mémoire (MEM).

## Patentansprüche

1. Verfahren zur zeitlichen Einteilung von zu Nachrichten gehörenden Zellemissionen mit einem gegebenen Zeitraum, wobei diese Nachrichten in einem Nachrichtenspeicher derart gespeichert sind, daß ihre Zellen an aufeinanderfolgenden Adressen dieses Nachrichtenspeichers gespeichert sind, wobei jeder Nachricht ein Zeitraum zugeteilt ist, dadurch gekennzeichnet, daß es darin besteht:
- während einer Phase der Initialisierung der Aussendung einer Nachricht in einem Feld eines Adreßspeichers (APDU) den Wert der Adresse in dem Nachrichtenspeicher (MPDU) der ersten Zelle dieser Nachricht in Verbindung mit ihrer Aussendezeit (Hre) zu speichern, anschließend
- zu jeder von einer lokalen Zeit (Hloc) angegebenen Zeit den Wert der Adresse, der in dem Feld des Adreßspeichers (,) enthalten ist und der mit der lokalen Zeit (Hloc) verbunden ist, abzulesen,
- die Aussendung der Zelle zu steuern, die diese Adresse im Nachrichtenspeicher (MPDU) hat,
- einerseits durch Addition des der Nachricht zugeteilten Zeitraumes, welcher die Zelle angehört, und andererseits der Aussendezeit der Zelle die Aussendezeit der nächsten Zelle der Nachricht zu berechnen,
- die Adresse der nächsten Zelle der Nachricht durch Inkremientierung der Adresse der laufenden Zelle zu bestimmen, und
- den Adreßwert der auf diese Weise bestimmten nächsten Zelle in einem Feld des Adreßspeichers in Verbindung mit ihrer auf diese Weise berechneten Aussendezeit zu speichern.

2. Verfahren nach Anspruch 1, dadurch gekennzeichnet, daß die Verbindung eines Adreßwertes mit einer Uhrzeit durch Adressierung eines Feldes des Adreßspeichers (APDU) mit einem für die Zeit repräsentätiven Signal erfolgt, wobei der Inhalt dieses Feldes der Adreßwert (APDU) ist.

3. Verfahren nach Anspruch 1, dadurch gekennzeichnet, daß die Verbindung eines Adreßwertes mit einer Uhrzeit durch Speicherung des Wertes und der Uhrzeit in zwei Bereichen eines selben Feldes des Adreßspeichers erfolgt.

4. Verfahren nach einem der vorhergehenden Ansprüche, dadurch gekennzeichnet, daß die Speicherung in dem Adreßspeicher in einem Feld erfolgt, dessen Adresse die erste nicht belegte Adresse ausgehend von der Adresse ist, die der Aussendezeit der betreffenden Zelle entspricht.

5. Vorrichtung zur zeitlichen Einteilung der zu Nachrichten gehörenden Zellemissionen mit einem gegebenen Zeitraum, wobei die Nachrichten in einem Nachrichtenspeicher (MPDU) derart gespeichert sind, daß ihre Zellen an aufeinanderfolgenden Adressen des Nachrichtenspeichers (MPDU) gespeichert werden, wobei ein Zeitraum (T) jeder Nachricht zugeteilt ist, wobei diese Vorrichtung für den Einsatz des Verfahrens nach einem der Ansprüche 1 bis 4 bestimmt ist, dadurch gekennzeichnet, daß sie umfaßt:
- einen Adreßspeicher (APDU), in dessen Feldern die Werte der Adressen in dem Nachrichtenspeicher der auszusendenden Zellen an Adressen gespeichert werden, die jeweils den Aussendezeiten (Hre) der entsprechenden Zellen entsprechen,
- eine Zeitbasis (BT), die vorgesehen ist, um im Lesemodus den Adreßspeicher mit einem Adreßsignal (Hloc) zu adressieren, das einer lokalen Zeit entspricht, wobei der Adreßspeicher (APDU) nun den Wert einer Adresse (AdrS) des Nachrichtenspeichers (MPDU) liefert,
- eine Steuereinheit (GPDU), die vorgesehen ist, um den abgelesenen Adreßwert (AdrS) zu empfangen, und die gleichzeitig die Aussendung der an dieser Adresse (AdrS) des Nachrichtenspeichers (MPDU) gespeicherten Zelle steuert,
- einen Übersetzungsspeicher (MTRAD), in dessen jeweiligen Feldern einerseits der Zeitraum (T), der einer gegebenen virtuellen Kreisnummer (VCI) zugeordnet ist, und andererseits die Aussendezeit (TAT) der nächsten auszusendenden Zelle der Nachricht, die von diesem virtuellen Kreis (VCI) getragen wird, gespeichert sind, wobei die Adresse jedes Feldes der Nummer des virtuellen Kreises (VCI) entspricht, wobei die Steuereinheit (GPDU) den Übersetzungsspeicher (MTRAD) im Lesemodus mit der Nummer des virtuellen Kreises (VCI) adressiert, dem die Zelle angehört, die soeben ausgesandt wurde, und wobei der Übersetzungsspeicher (MTRAD) den Zeitraum (T) und die entsprechende Aussendezeit (TAT) liefert,
- eine Additionseinrichtung (ADD), die den Zeitraum (T) und die Aussendezeit (TAT), die von dem Übersetzungsspeicher (MTRAD) geliefert wurden, addiert und der die Aussendezeit (Hte) der nächsten Zelle berechnet, wobei die Steuereinheit (GPDU) den Adreßwert (AdrS + 1) der nächsten auszusendenden Zelle bestimmt, wobei die Additionseinrichtung (ADD) vorgesehen ist, um den Adreßspeicher (APDU) im Schreibmodus mit der Aussendezeit (Hte) zu adressieren, die im Hinblick auf das Schreiben des auf diese Weise bestimmten Adreßwertes (AdrS + 1) in den Adreßspeicher berechnet wurde.

6. Vorrichtung nach Anspruch 5, dadurch gekennzeichnet, daß sie ferner Mittel (MAD) umfaßt, die vorgesehen sind, um das Schreiben des Adreßwertes der nächsten Zelle in ein Feld des Adreßspeichers (APDU) an der ersten nicht belegten Adresse ausgehend von der Adresse zu ermöglichen, die der Aussendezeit, die von der Additionseinrichtung (ADD) bestimmt wurde, entspricht.

7. Vorrichtung zur zeitlichen Einteilung der zu Nachrichten gehörenden Zellemissionen mit einem gegebenen Zeitraum, wobei die Nachrichten in einem Nachrichtenspeicher (MPDU) derart gespeichert sind, daß ihre Zellen an aufeinanderfolgenden Adressen des Nachrichtenspeichers (MPDU) gespeichert werden, wobei ein Zeitraum (T) jeder Nachricht zugeteilt ist, wobei diese Vorrichtung für den Einsatz des Verfahrens nach einem der Ansprüche 1 bis 4 bestimmt ist, dadurch gekennzeichnet, daß sie umfaßt:
- einen Adreßspeicher (MEM) vom Typ Assoziativspeicher, der eine Nehrzahl von Speicherfeldern umfaßt, von denen jedes in ein erstes Feld, das dazu bestimmt ist, den Wert (AD) einer Adresse in dem Nachrichtenspeicher (MPDU) einer Zelle einer auszusendenden Nachricht zu enthalten, in ein zweites Feld, das dazu bestimmt ist, die Aussendezeit (TAT) der nächsten Zelle der Nachricht zu enthalten, in ein drittes Feld, das ein binäres Belegungselement (EB) enthält und in ein viertes Feld unterteilt ist, das ein binäres Vergleichselement (CMP) enthält, dessen Zustand für das Ergebnis des Vergleichs zwischen dem Wert (TAT), der in dem zweiten Feld enthalten ist, und dem Wert, der an einem Eingang (T), einem sogenannten Sucheingang des Speichers (MEM), vorhanden ist, repräsentativ ist,
- eine Zeitbasis (BT), die vorgesehen ist, um an den Sucheingang (T) des Speichers (MEM) ein lokales Zeitsignal (Hloc) zu senden, wobei der Speicher (MEM), der nun im Lesemodus positioniert ist, den Adreßwezt (AdrS) liefert, der in dem ersten Bereich des Feldes enthalten ist, dessen Adresse die erste Adresse ausgehend von einer vorbestimmten Adresse ist und dessen binäres Vergleichselement (CMP) eine Gleichheit zwischen dem lokalen Zeitsignal (Hloc), das an seinem Sucheingang (T) vorhanden ist, und dem Inhalt (TAT) seines zweiten Bereichs kennzeichnet,
- eine Steuereinheit (GPDU), die vorgesehen ist, um den abgelesenen Adreßwert (AdrS) zu empfangen, und die gleichzeitig die Aussendung der an dieser Adresse des Nachrichtenspeichers (MPDU) gespeicherten Zelle steuert,
- einen Übersetzungespeicher (MTRAD), in dessen jeweiligen Feldern einerseits der Zeitraum (T), der einer gegebenen virtuellen Kreisnummer (VCI) zugeordnet ist, und andererseits die Aussendezeit (TAT) der nächsten auszusendenden Zelle der Nachricht, die von diesem virtuellen Kreis (VCI) getragen wird, gespeichert sind, wobei die Adresse jedes Feldes der Nummer des virtuellen Kreises (VCI) entspricht, wobei die Steuereinheit (GPDU) den Übersetzungsspeicher (MTRAD) im Lesemodus mit der Nummer des virtuellen Kreises (VCI) adressiert, dem die Zelle angehört, die soeben ausgesandt wurde, und wobei der Übersetzungsspeicher (MTRAD) den Zeitraum (T) und die entsprechende Aussendezeit (TAT) liefert,
- eine Additionseinrichtung (ADD), die den Zeitraum (T) und die Aussendezeit (TAT), addiert, die Aussendezeit (Hte) der nächsten Zelle berechnet und diese an den Adreßspeicher (MEM) zum Schreiben in den zweiten Bereich eines Feldes liefert, wobei die Steuereinheit (GPDU) den Adreßwert (AdrS +1) der nächsten auszusendenden Zelle bestimmt und diesen an den Adreßspeicher (MEM) zum Schreiben in den ersten Bereich des Feldes liefert, wobei dieses Feld das Feld ist, dessen Adresse die erste ausgehend von einer vorbestimmten Adresse ist und dessen binäres Belegungselement (EB) einen Zustand aufweist, der eine Belegung kennzeichnet.

8. Vorrichtung nach Anspruch 7, dadurch gekennzeichnet, daß sie ferner einen Summierkreis (SOM) umfaßt, um ein Signal zu liefern, das für die Anzahl von binären Vergleichselementen (CMP) repräsentativ ist, die eine Gleichheit zwischen dem Inhalt (TAT) des zweiten Bereichs der Felder des Speichers (MEM) und dem an dem Sucheingang (T) des Speichers (MEM) vorhandenen Wert kennzeichnet, eine Datei (Fifo) vom Typ erster Eingang - erster Ausgang umfaßt, in der während einer ersten Zeit (t1) der Steuerung des Ablesens des Speichers (MEM) einerseits die Emissionszeit (TATs), die von dem Speicher (MEM) geliefert wird, und andererseits die Anzahl (ns), die von dem Summierkreis (SOM) geliefert wird, gespeichert sind, wobei das lokale Zeitsignal (Hloc) am Sucheingang (T) des Speichers (MEM) während der ersten Zeit (t1) vorhanden ist, ein Register (R) umfaßt, das mit den Wert beladen ist, der von der Datei (Fifo) geliefert wird, wenn sich diese im Lesemodus befindet, und einen Zähler (DEC) unfaßt, der mit dem Wert (ns) der Anzahl, die von der Datei (Fifo) geliefert wird, initialisiert wird, wenn sich diese im Lesemodus befindet, und der um eine Einheit bei jeder Ablesung des Registers (R) dekrementiert wird, wobei die Datei (Fifo) sich im Lesemodus befindet, wenn der Zähler (DEC) eine Nullzählung erreicht, wobei das Register (R) abgelesen wird, um das Zeitsignal (TATh) an den Sucheingang (T) des Speichers (MEM) bei einer zweiten Zeit (T2) der Steuerung des Speichers (MEM) im Lesemodus zu liefern.

## Claims

1. Method for temporally spacing, with a given period, the transmission of cells belonging to messages, the said messages being stored in a message memory such that their cells are stored at consecutive addresses in the said message memory, a period being assigned to each message, whereby it entails:
- during an initialization phase of message transmission, storage in a segment in the address memory (PD) ofthe address value in the said message memory (MPDU) of the first cell of the said message in relation to its transmission time (Hre), then
- at each time given by a local time (Hloc);
- reading off the address value contained in the address memory segment (PD) relating to the said local time (Hloc);
- initiating transmission of the cell with the said address in the message memory (MPDU);
- calculating, by addition, firstly of the period assigned to the message to which the said cell belongs and, secondly, the transmission time of the said cell, the transmission time of the next cell of the said message;
- determining the address of the next cell of the said message by incrementing the address of the said current cell and
- storing the address value of the next cell, determined as above, in a segment in the address memory in relation to its calculated transmission time.

2. Method as per claim 1, whereby association of an address value and a time is achieved by addressing a segment in the address memory (ADPU) with a signal representing the said time, the content of the said segment being the said address value (PD).

3. Method as per claim 1, whereby the association of an address value and time is achieved by storing the said value and time in two fields in the same segment of the said address memory.

4. Method as per one of the above claims, whereby storage in the said address memory is made in a segment whose address is the first unoccupied address based on the address corresponding to the transmission time of the cell concemed.

5. Device for temporally spacing, with a given period, the transmission of cells belonging to messages, the said messages being stored in a message memory (MPDU) such that their cells are stored in consecutive addresses in the said message memory (MPDU), a period (T) being assigned to each message, the said device being designed to implement the method as per claims 1 to 4, whereby it comprises:
- an address memory (APDU) in whose segments, at addresses corresponding to the transmission times (Hre) ofthe corresponding cells respectively, the values of addresses are stored in the said message memory of the cells to be transmitted;
- a time base (BT) designed to read offthe addresses of the said address memory with an address signal (Hloc) corresponding to a iocal time, the address memory (APDU) then relaying the value of an address (AdrS) in the message memory (MPDU);
- a control unit (GPDU) designed to receive the said address value read off (AdrS), at the same time initiating transmission of the cell stored in the said address (AdrS) in the message memory (MPDU);
- a translating memory (MTRAD) with storage in each segment of firstly the period (T) assigned to a given virtual circuit number (VCI) and secondly the time of transmission (TAT) of the next cell to be transmitted of the message carried by the said virtual circuit (VCI), the address of each segment corresponding to the number of the said virtual circuit (VCI), this control unit (GPDU) addressing the translating memory (MTRAD) in read mode with the virtual circuit number (VCI) to which the cell just transmitted belongs, this translating memory (MTRAD) relaying the said period (T) and the corresponding transmission time (TAT);
- an adder (ADD) which totals the said period (T) and transmission time (TAT) relayed by the translating memory (MTRAD), which calculates the transmission time (The) of the next cell, the control unit (GPDU) determining the address value (AdrS + 1) of the next cell to be transmitted, the said adder (ADD) being designed to address the address memory (APDU) in write mode with the transmission time (Hte) calculated with a view to writing the said address value (AdrS + 1) thus determined, in the address memory;

6. Device as per claim 5, whereby it also comprises a means (MAD) designed to enable the said address value of the next cell to be written in a segment of the address memory (APDU) at the first unoccupied address from the address corresponding to the transmission time determined by this adder (ADD).

7. Device for temporally spacing, with a given period, the transmission of cells belonging to messages, the said messages being stored in a message memory (MPDU) such that their cells are stored at consecutive addresses in the message memory (MPDU), a period (T) being assigned to each message, this device being designed to implement the method as per one of claims 1 to 4, whereby it comprises:
- an associative type address memory (MEM) comprising several memory storage segments, each of which is divided into an initial field designed to contain the value (AD) of an address in the said message memory (MPDU) of a cell of a message to be transmitted, a second field designed to contain the time of transmission (TAT) of the next cell of the said message, a third field containing a binary occupation clement (EB) and a fourth field containing a binary comparison element (CMP) whose status represents the result of the comparison between the value (TAT) contained in the second field and the value present on a so-called search input (T) of this memory (MEM);
- a time base (BT) designed to relay a local time signal (Hloc) to the said search input (T) of the memory (MEM), the said memory (MEM) then being set in read mode relaying the address value (AdrS) contained in the first field of the segment whose address is the first address from a predetermined address and whose binary comparison element (CMP) indicates equality between the said local time signal (Hloc) present on its search input (T) and the content (TAT) of its second field;
- a control unit (GPDU) designed to receive the said address value read off (AdrS) and to initiate at the same time transmission of the cell stored in the said address of the message memory (MPDU);
- a translating memory (MTRAD) with storage in each segment of this of, firstly, the period (T) assigned to a given virtual circuit number (VCI) and, secondly, the transmission time (TAT) of the next cell to be transmitted of the message carried by the said virtual circuit (VCI), the address of each segment corresponding to the number of the said virtual circuit (VCI), the said control unit (GPDU) addressing the translating memory (MTRAD) in read mode with the number of the virtual circuit (VCI) to which the cell just transmitted belongs and the translating memory (MTRAD) relaying the said period (T) and corresponding transmission time (TAT);
- an adder (ADD) which totals the said period (T) and transmission time (TAT), calculates the transmission time (Hte) of the next cell and relays it to the said address memory (MEM) for writing into the second field of a segment, the control unit (GPDU) determining the address value (AdrS + 1) of the next cell to be transmitted and relaying it to the said address memory (MEM) for writing into the first field of the said segment, this segment being that in which the address is the first based on a predetermined address and whose binary occupation element (EB) status indicates availability.

8. Device as per claim 7, whereby it also includes a totalizing circuit (SOM) to provide a signal representing the number of binary comparison elements (CMP) indicating equality between the content (TAT) of the second field of the segments of the said memory (MEM) and the value present on the search input (T) of the said memory (MEM), a first in/first out (FIFO) type queue with storage in these, during an initial time (t1) of initialization of read-off of the said memory (MEM), of firstly the transmission time (TAT_{S} ) relayed by the said memory (MEM) and, secondly, the number (n_{S}) relayed by the totalizing circuit (SOM), the local time signal (Hloc) being present at the search input (T) of the said memory (MEM) during this said initial period (t₁), a register (R) which is loaded with the value relayed by the said queue (FIFO) when the latter is in read mode and a secondary counter (DEC) which is initialized with the value (n_{S}) of the number relayed by the queue (FIFO) when it is read mode and which is decremented by one unit each time the register (R) is read, the queue (FIFO) being in read mode when the secondary counter (DEC) reaches a count of zero, the register (R) being read to relay the time signal (TAT_{M}) to the search input (T) of the said memory (MEM) when the read command of the said memory (MEM) is activated a second time (t₂).
